# EUROPEAN PATENT SPECIFICATION

(11) **EP 3 446 932 B1**
(45) Date of publication and mention of the grant of the patent: **18.12.2019**
(21) Application number: 17187120.5
(22) Date of filing: 21.08.2017
(51) Int. Cl.: B60R 21/237

(54) **IMPROVEMENTS IN OR RELATING TO AIR-BAG FOLDING**
VERBESSERUNGEN AN ODER IM ZUSAMMENHANG MIT DEM FALTEN VON AIRBAGS
AMÉLIORATIONS DE OU RELATIVES À UN MATÉRIAU D'AIRBAG

(43) Date of publication of application: 27.02.2019
(73) Proprietor: Autoliv Development AB, 447 83 Vårgårda (SE)
(72) Inventor: Gulde, Alexander, S-447 83 Vargarda (SE)
(74) Representative: Beattie, Alex Thomas Stewart

(56) References cited:
- EP-A2- 1 031 473
- EP-A2- 1 127 752
- DE-A1-102009 033 561
- US-B1- 6 260 330

## Description

### Description of Invention

This invention relates to air-bag folding, and in particular concerns methods and apparatuses for folding air-bags to be used as safety/restraint arrangements in vehicles.

A modern vehicle will include several air-bag modules. Each module comprises one or more flexible cushions, which are initially housed within a housing. It is always desirable for the overall volume of an air-bag module to be as small as possible, so that it occupies the minimum space within the vehicle. Various techniques have been developed for folding or otherwise packing an air-bag cushion tightly into a space within an air-bag module. However, tight packing of the air-bag must not interfere with the deployment characteristics of the air-bag.

Most current techniques involve a combination of engineering folding and/or chaotic/compression folding of air-bag cushions, coupled with high compressive forces to drive the air-bag into the desired package volume.

An example of an airbag folding method is disclosed in US 6 260 330 B1, the method comprises: fixing an airbag to be folded in a housing with its closed end at an upper part of the housing and fastening it with its open end at a base element lying opposite to the upper part in such a manner that the base element seals off the interior of the airbag against the inner space of the housing; moving the housing and the base element relative to one another; and varying the pressure within the airbag and/or the housing during the relative movement. This document also discloses an apparatus for the folding of an airbag, in particular for carrying out the described folding method.

Due to the elastic nature of air-bag material, and also to the fact that gases such as air are unavoidably embedded in the air-bag material, the folded air-bag cushion tends to increase in volume once it is sealed inside an air-bag module. This can lead to large forces within the air-bag module, which may limit the use of features such as covers, foils or wrappers. In extreme cases, the housing of the air-bag module may distort or deform as a result of outward forces generated by the folded air-bag cushion.

Some known techniques for folding air-bag cushions involve heating and subsequent cooling. One example of this is described in US 9,333,933, in which an air-bag cushion is folded within a container, and a pressing element is subsequently used to compress the air-bag within the container. Heat is applied to the container during and after the compression process, for a period of around two hours. The air-bag cushion is then cooled, whilst still remaining in a compressed condition within the container. After the cooling step is complete, the compressed air-bag cushion can be removed, and placed within a housing to form an air-bag module.

While effective, techniques of this kind involve a long cycle time, and relatively large ovens or other heating/cooling devices.

It is an object of the present invention to seek to provide an improved apparatus and method for compressing an air-bag cushion.

Accordingly, one aspect of the present invention provides a compression apparatus comprising: a device having an internal cavity into which a vehicle air-bag may be placed; a compression arrangement operable to reduce the volume of the cavity, wherein the compression arrangement is configured to reduce the volume of the cavity in more than one stage, with reduction in volume being halted between stages; a selectively openable valve having a closed position, in which the cavity is sealed in a gas-tight or substantially gas-tight manner, and an open position, in which a gas flow path is opened, allowing communication between the cavity and a further region; and a valve control arrangement operable to place the valve in the closed position during an initial compression, and operable to place the valve in the open position when the temperature and/or pressure within the cavity reaches a predetermined level.

Advantageously, the amount by which the compression arrangement has reduced the volume of the cavity is used as an indication of the temperature and/or pressure within the cavity.

Preferably, a pressure or temperature sensor is positioned within the cavity to provide an indication of the temperature or pressure within the cavity.

Conveniently, the device comprises an elongate tube, and the compression arrangement comprises a piston which is moveable within the tube to reduce the volume of the cavity.

Advantageously, two or more pistons are provided, and wherein the pistons are independently moveable within the tube to reduce the volume of the cavity.

Another aspect of the present invention provides a method of compressing an item, comprising the steps of: providing a device having an internal cavity; placing the item within the cavity; reducing the volume of the cavity, while the cavity is sealed in a gas-tight or substantially gas-tight manner, through the action of a compression arrangement, to heat gas within the cavity by adiabatic heating, wherein the compression arrangement is configured to reduce the volume of the cavity in more than one stage, with reduction in volume being halted between stages; when the temperature and/or pressure within the cavity has reached a desired level, opening an air flow path between the cavity and a further region; and removing the item from the cavity.

Preferably, the item is a vehicle air-bag.

Conveniently, the method comprises the step, following the opening of the air flow path, of allowing the item to cool before the step of removing the item.

Advantageously, the method comprises the step, following the opening of the air flow path, of further reducing the volume of the internal cavity, whilst maintaining the air flow path in an open position.

Preferably, a selectively openable valve is provided to open the air flow path.

Conveniently, the method further comprises the step of adding an additive material to the cavity, and preferably wherein the additive material has a phase change temperature which is between the desired temperature and the temperature of the further region.

Advantageously, the step of reducing the volume of the cavity comprises reducing the volume of the cavity to between one fifth and one fifteenth of its initial volume.

Preferably, the further region is the surrounding atmosphere.

Alternatively, the further region comprises the interior of a vessel in which the gas pressure is reduced compared to the surrounding atmosphere.

In order that the invention may be more readily understood, embodiments thereof will now be described, by way of example, with reference to the accompanying drawings, in which:
Figures 1a and 1b show steps in a first method embodying the invention; and
Figures 2a-2c show steps in a second method embodying the invention.

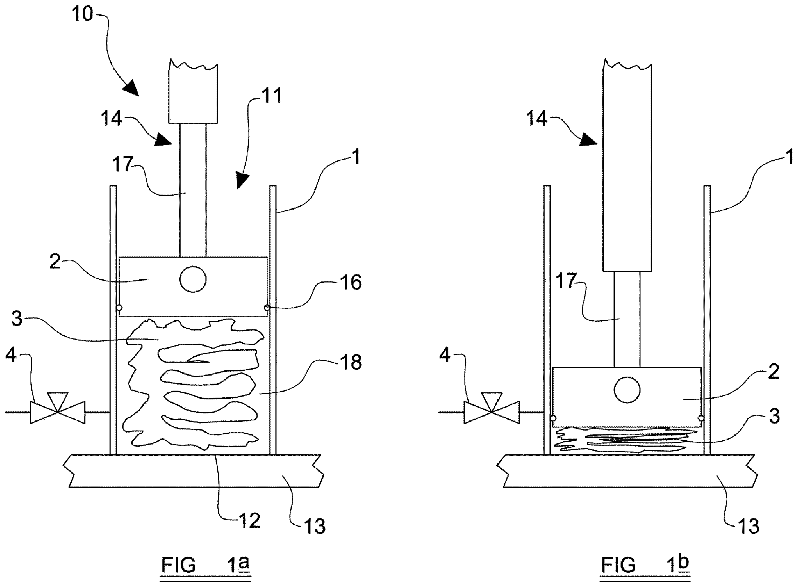

Referring firstly to figure 1a, an initial step in a first method embodying the present invention is shown.

A compression apparatus 10 includes a cylinder 1, which is preferably formed from a robust material such as steel and is open at one end (in this case, the top end 11). The other (in this case, bottom) end 12 of the cylinder 1 is closed and sealed, and in the depicted embodiment this is achieved by fixing the cylinder 1 in an air-tight fashion to a robust work surface 13.

A piston 14 is positioned within the cylinder 1. The piston 14 includes a piston head 2, which is a close fit within the interior cross-sectional shape of the cylinder 1. In the embodiment shown a seal, in the form of an O-ring 16, is provided between the outer surface of the piston head 2 and the inner surface of the cylinder 1, so a gas-tight seal is formed between these components. Any other suitable sealing arrangement may also be used, however.

The piston 14 also includes a piston shaft 17, which is connected to the piston head 2.

It will be understood that an interior volume 18 within the cylinder 1 is formed, bounded by the walls of the cylinder 1, the work surface 13 and the piston head 2, and that this interior volume 18 is sealed or substantially sealed with respect to the surrounding atmosphere, so that no gas exchange, or substantially no gas exchange, may occur between the interior volume 18 and the surrounding atmosphere.

The piston 14 may move along the length of the cylinder 1. It will be understood that, as the piston 14 moves within the cylinder 1, the interior volume 18 defined within the cylinder 1 will change. The O-ring 16 (or other seal) is arranged so that the interior volume 18 remains sealed from the surrounding atmosphere as the piston head 2 moves within the cylinder 1.

The piston 14 is preferably connected to a drive arrangement (not shown) which is operable to drive the piston 14 in a longitudinal direction with respect to the cylinder 1. Preferably, the drive arrangement is operable to drive the piston 14 in both directions with respect to the cylinder 1.

A valve 4 provides a selectively openable gas flow path between the interior volume 18 of the cylinder 1 and the surrounding atmosphere. In some embodiments, an aperture may be formed in the wall of the cylinder 1, with a pipe or tube leading from the aperture to the valve 4. When the valve 4 is closed, the interior volume 18 within the cylinder 1 is, as discussed above, sealed or substantially sealed with respect to the surrounding atmosphere. However, the valve 4 may be opened to open an air flow path between the atmosphere and the interior volume 18. In preferred embodiments the valve 4 may be opened by varying amounts, so that the width (i.e. diameter or cross-sectional area) of the air flow path may be controlled.

Figure 1a shows the apparatus 10 in an initial position. An air-bag 3 is positioned within the interior volume 18 of the cylinder 1. The air-bag 3 may be loosely folded at this stage.

In the next stage of the method, the piston 14 is driven downwardly with respect to the cylinder 1 by the drive arrangement. This will have the effect of reducing the interior volume 18 of the cylinder 1.

As the piston 14 is driven downwardly with respect to the cylinder 1, the gas within the interior volume 18 will be compressed, and the temperature of the gas will increase. The skilled reader will understand that this is an example of adiabatic heating, in which the temperature of a gas rises where work is done on the gas by its surroundings, in this case by the movement of the piston 14.

The air-bag 3 within the cylinder 1 will also be compressed by the movement of the piston 14. As the gas surrounding the air-bag 3 increases in temperature, this increased temperature will be transmitted to the material of the air-bag 3 itself, through convection and conduction processes. The temperature of the air-bag material will therefore rise.

Once the temperature of the gas within the interior volume 18 has reached a desired level, the valve 4 is opened (fully or partially), to open an air flow path between the interior volume 18 of the cylinder 1 and the surrounding atmosphere. Since the pressure of gas within the interior volume 18 will be significantly higher than that of the surrounding atmosphere, this will lead to flow of gas out of the interior volume 18 to the atmosphere.

The skilled reader will appreciate that the valve 4 must be connected to the cylinder 1 at a location which will allow fluid communication with the interior volume 18 when the piston 14 has moved downwardly by the maximum amount.

This will result in a drop in the temperature within the interior volume 18, as the pressure within the interior volume 18 drops to be equal or substantially equal to that of the surrounding atmosphere.

At this stage of the method, the piston 14 may remain in place for a period of time, to maintain the air-bag 3 in a compressed state as it cools down. This will help to allow the air-bag 3 to retain its compressed configuration for a longer period of time after being removed from the compression apparatus 10.

Following this optional step, the air-bag 3 is removed from the apparatus 10. This may be achieved by raising the piston 14 with respect to the cylinder 1 until the piston 14 is completely removed from the cylinder 1 and the air-bag 3 can be accessed, and removed to be placed in a housing to form an air-bag module.

Using the above technique, an air-bag can be compressed and heated in a very fast and efficient manner.

In prior art techniques, such as disclosed in US 9,333,933, a relatively large container is provided, and this container must be heated in order for heat to be transmitted to an air-bag held within the container. This will take a relatively long time, and require a relatively large amount of energy, since the container will be a large item and must be heated from the outside, through the thickness of its external walls to the inside, and then to the air-bag held within the container. The container will also take a correspondingly long time to cool down.

By contrast, in techniques such as that described above, only the air (and/or other gases or other substances) held within the cylinder 1 is heated, and this heating preferably arises from compression. Clearly, the amount of energy required to heat up a volume of air within a container will be significantly less than the energy required to heat up the entire container.

A further advantage is that the air within the cylinder 1 will surround the air-bag 3 on all sides. The air will be heated uniformly during the compression process, and heat will therefore be applied to all parts of the air-bag simultaneously. This is in contrast to processes such as the one disclosed in US 9,333,933, in which the parts of the air-bag which are closest to the walls of the container will be heated first, and heat will only then be conducted to the central parts of the air-bag, i.e. those parts of the air-bag which are furthest from the walls of the container.

US 9,333,933 discloses that a heating cycle may take around 2 hours, and that a subsequent cooling cycle may take around 15 - 25 minutes.

By contrast, it is anticipated that an air-bag may be heated, compressed and cooled using techniques embodying the present invention within a time scale of around 1 minute.

As discussed above, the valve 4 is opened once the temperature within the cylinder 1 has reached a desired level. Optionally, once the desired temperature has been reached, the piston 14 may be held in place, with the valve 4 in the closed position, for a length of time before the valve 4 is opened, to compress the air-bag at an elevated temperature for an extended period. In some embodiments this length of time may be up to 1 minute, and may for example be 10-30 seconds, or 30-60 seconds. In other embodiments the length of time may be longer or shorter, depending on the requirements of the particular process.

In some embodiments, a temperature sensor may be positioned within the interior volume 18 of the cylinder 1, to provide a direct indication of the temperature within the interior volume 18. This indication may be used in the control of the valve 4. For instance, a processor may be connected to receive output signals from the temperature sensor, and to provide a control signal to the valve 4 when the temperature within the interior volume 18 reaches the desired level.

Alternatively, or in addition, a pressure sensor may be provided within the interior volume 18. As the gas within the interior volume 18 is compressed, the pressure and temperature of the gas will increase in known relation, and the pressure within the interior volume 18 may therefore be used as an indication of the temperature within the interior volume 18. Once again, signals from the pressure sensor may be used in the control of the valve 4.

As an alternative, the position of the piston 14 within the cylinder 1 may be used as an indication of the temperature within the interior volume 18. As the piston 14 moves within the cylinder 1, the reduction in volume of the interior volume 18 of the cylinder 1 will lead to increased temperature within the interior volume 18 in a reliable and predictable manner. In an initial testing and set-up phase of the apparatus 10, the piston 14 may be used to compress air within the cylinder 1, and a temperature sensor may be positioned within the cylinder 1 to provide information as to how the temperature rises as the air within the cylinder 1 is compressed. In this testing phase, an air-bag may be positioned within the cylinder 1, in order to replicate more accurately the conditions under which the apparatus 10 will ultimately be used.

Once the temperature within the interior volume 18 has been correlated with the movement of the piston 14, the movement of the piston 14 itself can then simply be used as in indication of the temperature within the cylinder 1. During subsequent use of the apparatus 10, therefore, the use of a temperature or pressure sensor may be unnecessary.

A linear encoder or other sensor may be used to measure accurately the position of the piston 14 within the cylinder 1, and/or the distance by which the piston 14 has moved with respect to the cylinder 1 with respect to a starting position. This information may then be used in the control of the valve 4.

As a further alternative, a sensing arrangement may be used to determine when a part of the piston 14 has reached a predetermined position, with this position representing or being linked to a desired temperature within the interior volume 18. For instance, a part of the piston head 2, or the shaft 17 of the piston 14, may be provided with a certain marking, and a laser sensor may be used to determine when the marking has reached a certain position.

In preferred embodiments of the invention, the air within the cylinder 1 is heated to a temperature of around 100° - 170° C. More preferably, the air within the cylinder 1 is heated to a temperature of around 100° - 150° C. Yet more preferably, the air may be heated to a temperature of around 125° - 150° C.

The invention is not limited to these values, and any other suitable temperature may be used, depending upon factors such as the material from which the air-bag is formed, and the material of any coating which is applied to the air-bag.

The apparatus 10 may be operable to generate a range of desired temperatures within the interior volume 18, and a user may be able to select a desired or target temperature.

As the skilled reader will appreciate, the temperature generated within the interior volume 18 will be determined by the compression ratio that is used. A processor may be provided, which may receive an input specifying a desired temperature, and control the movement of the piston 14 to reach the desired temperature. This could be achieved through direct feedback from a temperature and/or pressure sensor within the interior volume 18, or through measurement of the position/change in position of the piston 14. As discussed above, the apparatus 10 may be calibrated in an initial phase, so that movements of the piston 14 may be correlated with various temperatures achieved within the interior volume 18.

For an air-bag cushion having a capacity of 64 litres, it is envisaged that the air-bag may be initially placed into a cavity having a volume of around 300 cm³. A compression ratio of between around 5:1 to 15:1 may then be used to elevate the temperature of the air in the cavity to the required level. These figures are provided only as an example, and the initial volume of the cavity, and the compression ratio used, will depend on the requirements of the particular application.

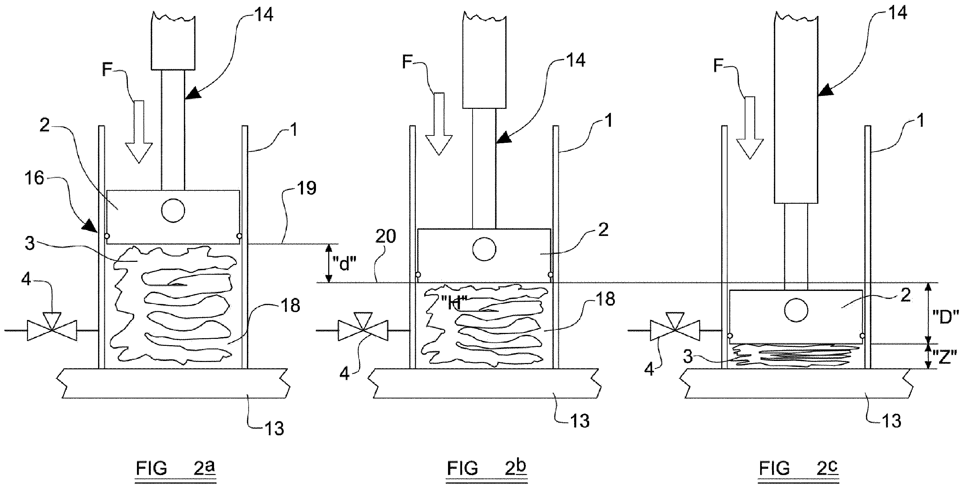

Figures 2a, 2b and 2c show stages in a second method embodying the present invention.

Figure 2a shows an initial stage, which is identical to that shown in figure 1a. As before, an air-bag 3 is placed within the interior volume 18 of the cylinder 1, below the piston 14. At this stage the bottom of the piston head 2 is at a first level 19 (i.e. a first longitudinal position along the length of the cylinder 1), and the valve 4 is in the closed position.

A force (F) is applied to the piston 14, driving the piston 14 downwardly (i.e. towards the closed end 12 of the cylinder 1) and compressing the air within the interior volume 18.

Referring to figure 2b, the piston 14 has moved downwardly so that the bottom of the piston head 2 is at a second level 20, which is a distance d below the initial level 19. This second position 20 results in the generation of a desired level of heat (H) within the cylinder 1. At this stage, the valve 4 is opened, which allows gas to escape from the interior volume 18 to the atmosphere. This has the effect of cooling the interior volume 18 of the cylinder 1 (and hence cooling the air-bag 3), and also allowing further compression of the air-bag 3, as the piston 14 will encounter less resistance to further downward motion.

The downward force F continues to be applied to the piston 14, with the valve 4 remaining in the open position, until the bottom of the piston head 2 has reached a third level 21, which is a distance D below the second level 20. The third level 21 is a total distance of d + D below the first level 19. In the final position, shown in figure 2c, the air-bag 3 has been compressed into a total height Z. At this stage, the air-bag 3 is fully compressed and also cooled, and is ready to be removed from the cylinder 1 and placed within a housing to form an air-bag module.

In some embodiments the force F applied at this stage may be between around 2kN and about 100kN. A cylinder having a larger surface area will, in general, require a larger force to compress the air within the cylinder.

In the first method shown in figures 1a and 1b, the valve 4 is not opened until the piston 14 has moved to create the maximum compression used during the process.

By contrast, in the second method shown in figures 2a - 2c, the piston 14 moves by a first amount, to compress the air within the interior volume 18, and the valve 4 is then opened, before the piston 14 moves by a further amount, to cause further reduction in the volume of the interior volume 18.

It will be understood that methods embodying the present invention may allow an air-bag cushion to be compressed and heated in a rapid and efficient manner.

In the examples discussed above, the gas within the cylinder 1 is air. However, in other embodiments one or more additives may be included within the cylinder 1 as the process is carried out, or indeed an entirely different gas or fluid may be used instead of air.

For instance, an additive may be included to assist with the cooling process. For this purpose, a material may be used which has a phase change temperature (either freezing point or boiling point) in the temperature range of the cooling process, and higher than the temperature of the surrounding atmosphere. It will be understood that, as the temperature within the interior volume 18 drops, energy will be removed from the interior volume by the change of phase of the additive material, thus helping to lower the temperature.

Preferably, the additive material is added to the interior volume 18 during or shortly before the compression phase of the process, and the additive material is preferably pre-heated to a temperature above its phase change temperature.

Examples of suitable materials include water or alcohol with a high specific heat capacity. Paraffin wax (of various kinds) may also be used as an additive, and it is expected that this will be useful where the fabric of the air-bag cushion is pre-treated.

The piston 14 moves with respect to the cylinder 1 in one or more stages, with movement of the piston 14 with respect to the cylinder 1 being halted between stages. In some embodiments, this may resemble a 'pumping' motion of the piston 14 with respect to the cylinder 1.

In the embodiments described above, a cylinder 1 is provided, having a generally circular cross section, and a piston 14 is moveable within the cylinder 1. However, it is important for the present invention that some container is provided, in which an air-bag can be placed along with a quantity of gas, and that the volume within this container can subsequently be reduced, leading to heating of the gas, and of the air-bag. The container does not need to take the form of a cylinder and a piston. The skilled reader will be aware of other ways in which this compression may be achieved.

In the embodiments described above, in order to remove the compressed air-bag 3 from the apparatus 10, the piston 14 is moved within the cylinder 1 in a direction (upwards, as shown in the attached figures), which increases the volume of the interior volume 18. However, there is a risk that this will lower the pressure within the interior volume 18, leading to expansion of the air-bag 3, which is undesirable. The effect of this can be mitigated by leaving the valve 4 in the open position as the piston 4 is withdrawn from the cylinder 1.

Alternatively, however, the cylinder 1 may be provided with a removable bottom end, i.e. the end which is furthest from the piston 14. In the depicted examples, the cylinder 1 is attached to a work surface 13, and, for example, the cylinder 1 may be removably clamped in an air-tight fashion to the work surface 13. Once the air-bag 3 has been fully compressed, the cylinder 1 may be released from the work surface 13, allowing the compressed air-bag 3 to be removed from the cylinder 1 with less risk of unwanted expansion of the air-bag 3.

The cylinder 1 can then be re-attached to the work surface 13 in preparation for the next procedure.

In preferred embodiments of the invention, the heating of the gas within the cylinder 1 during the process arises due to the compression of the gas within the interior volume 18 of the cylinder, and no other heat sources are used.

While the discussion above focuses on vehicle air-bags, it is envisaged that the techniques described herein may be useful for compressing other items at an elevated temperature. The methods and apparatuses described herein may be used with any kinds of items.

The above description mentions that, following compression, the valve is opened to allow air to flow between the interior volume of the cylinder and the surrounding atmosphere. In some embodiments, the air flow path may be opened to a region in which the pressure is below atmospheric pressure. For instance, the cylinder may be at least partly surrounded by a region which is party evacuated, for instance by the cylinder being placed inside a pressure vessel. Alternatively, the region having below atmospheric pressure may be spaced apart from the cylinder, and connected to the valve by way of a pipe or tube.

Opening an air flow path to a region having reduced pressure will help the pressure within the cylinder reduce to a correspondingly low level, thus allowing even greater compression of the air-bag within the cylinder once the valve has been opened. In addition, the cooling effect at this stage will be increased.

The embodiments of the apparatus described above include only a single piston. However, it is envisaged that the apparatus may include two or more pistons. For example, a central piston (which is preferably circular in cross-section) may be surrounded by an outer piston (which is preferably annular or otherwise ring-shaped). The central and outer piston may be provided within a cylinder, with the outer piston being a close fit within the cylinder, and preferably being sealed against the inner wall of the cylinder with an O-ring or similar seal, as described above.

The two pistons may be actuated independently of each other, allowing a greater degree of control over the compression (and therefore heating) of the gas within the cylinder. For instance, when a relatively low compression ratio is needed, only one of the two pistons may be used, or one piston may be moved through only a reduced distance compared to the other piston. When a higher compression ratio is needed, both cylinders may be moved together, to act as a single, large piston.

Also, one of the pistons may be moved during a first compression stage, while the other piston does not move, or moves through a lesser distance, and then the other piston may be moved at a later time, during a subsequent compression stage.

The skilled reader will understand that this will increase the flexibility and adaptability of the apparatus, which will be able to support compression and folding schemes for different sizes and types of air-bags.

Three or more pistons may be used, and the skilled reader will understand how this may be achieved.

When used in this specification and claims, the terms "comprises" and "comprising" and variations thereof mean that the specified features, steps or integers are included. The terms are not to be interpreted to exclude the presence of other features, steps or components.

## Claims

1. A compression apparatus (10) comprising:
a device having an internal cavity (18) into which a vehicle air-bag (3) may be placed;
a compression arrangement (14) operable to reduce the volume of the cavity, wherein the compression arrangement is configured to reduce the volume of the cavity in more than one stage, with the reduction in volume being halted between stages;
a selectively openable valve (4) having a closed position, in which the cavity is sealed in a gas-tight or substantially gas-tight manner, and an open position, in which a gas flow path is opened, allowing communication between the cavity and a further region; and
a valve control arrangement operable to place the valve in the closed position during an initial compression, and operable to place the valve in the open position when the temperature and/or pressure within the cavity reaches a predetermined level.

2. A compression apparatus (10) according to claim 1, wherein the amount by which the compression arrangement (14) has reduced the volume of the cavity (18) is used as an indication of the temperature and/or pressure within the cavity.

3. A compression apparatus (10) according to claim 1 or 2, wherein a pressure or temperature sensor is positioned within the cavity (18) to provide an indication of the temperature or pressure within the cavity.

4. An apparatus (10) according to any preceding claim, wherein the device comprises an elongate tube (1), and the compression arrangement (14) comprises a piston which is moveable within the tube to reduce the volume of the cavity (18).

5. An apparatus (10) according to claim 4, wherein two or more pistons (14) are provided, and wherein the pistons are independently moveable within the tube to reduce the volume of the cavity (18).

6. A method of compressing an item, comprising the steps of:
providing a device (10) having an internal cavity (18);
placing the item (3) within the cavity;
reducing the volume of the cavity, while the cavity is sealed in a gas-tight or substantially gas-tight manner, through the action of a compression arrangement (14), to heat gas within the cavity by adiabatic heating, wherein the compression arrangement is configured to reduce the volume of the cavity in more than one stage, with the reduction in volume being halted between stages;
when the temperature and/or pressure within the cavity has reached a desired level, opening an airflow path between the cavity and a further region; and
removing the item from the cavity.

7. A method according to claim 6, wherein the item (3) is a vehicle air-bag.

8. A method according to claim 6 or 7, comprising the step, following the opening of the air flow path, of allowing the item (3) to cool before the step of removing the item.

9. A method according to any one of claims 6 to 8, comprising the step, following the opening of the airflow path, of further reducing the volume of the internal cavity (18), whilst maintaining the airflow path in an open position.

10. A method according to any one of claims 6 to 9, wherein a selectively openable valve (4) is provided to open the airflow path.

11. A method according to any one of claims 6 to 10, further comprising the step of adding an additive material to the cavity (18), and preferably wherein the additive material has a phase change temperature which is between the desired temperature and the temperature of the further region.

12. A method according to any one of claims 6 to 11, wherein the step of reducing the volume of the cavity (18) comprises reducing the volume of the cavity to between one fifth and one fifteenth of its initial volume.

13. An apparatus or method according to any preceding claim, wherein the further region is the surrounding atmosphere.

14. An apparatus or method according to any one of claims 1 to 12, wherein the further region comprises the interior of a vessel in which the gas pressure is reduced compared to the surrounding atmosphere.

## Patentansprüche

1. Kompressionseinrichtung (10), Folgendes umfassend:
eine Vorrichtung mit einem inneren Hohlraum (18), in den ein Fahrzeugairbag (3) platziert werden kann;
eine Kompressionsanordnung (14), die betriebsfähig ist, um das Volumen des Hohlraums zu verringern, wobei die Kompressionsanordnung konfiguriert ist, um das Volumen des Hohlraums in mehr als einer Stufe zu verringern, wobei die Verringerung des Volumens zwischen den Stufen angehalten wird;
ein Ventil (4), das selektiv geöffnet werden kann, mit einer geschlossenen Position, in der der Hohlraum auf eine gasdichte oder im Wesentlichen gasdichte Art verschlossen ist, und einer offenen Position, in der ein Gasströmungsweg geöffnet ist, der eine Kommunikation zwischen dem Hohlraum und einem weiteren Bereich ermöglicht; und
eine Ventilsteueranordnung, die betriebsfähig ist, um das Ventil während einer anfänglichen Kompression in die geschlossene Position zu platzieren, und betriebsfähig ist, um das Ventil in die offene Position zu platzieren, wenn die Temperatur und/oder der Druck innerhalb des Hohlraums ein vorbestimmtes Niveau erreicht.

2. Kompressionseinrichtung (10) nach Anspruch 1, wobei der Betrag, um den die Kompressionsanordnung (14) das Volumen des Hohlraums (18) verringert hat, als eine Anzeige für die Temperatur und/oder des Drucks innerhalb des Hohlraums verwendet wird.

3. Kompressionseinrichtung (10) nach Anspruch 1 oder 2, wobei ein Druck- oder Temperatursensor innerhalb des Hohlraums (18) positioniert ist, um eine Anzeige der Temperatur oder des Drucks innerhalb des Hohlraums bereitzustellen.

4. Einrichtung (10) nach einem der vorhergehenden Ansprüche, wobei die Vorrichtung ein verlängertes Rohr (1) umfasst, und die Kompressionsanordnung (14) einen Kolben umfasst, der innerhalb des Rohrs beweglich ist, um das Volumen des Hohlraums (18) zu verringern.

5. Einrichtung (10) nach Anspruch 4, wobei zwei oder mehr Kolben (14) bereitgestellt sind, und wobei die Kolben innerhalb der Röhre unabhängig beweglich sind, um das Volumen des Hohlraums (18) zu verringern.

6. Verfahren zum Komprimieren eines Gegenstandes, umfassend die folgenden Schritte:
Bereitstellen einer Vorrichtung (10) mit einem inneren Hohlraum (18);
Platzieren des Gegenstands (3) innerhalb des Hohlraums;
Verringern des Volumens des Hohlraums, während der Hohlraum durch die Wirkung einer Kompressionsanordnung (14) auf eine gasdichte oder im Wesentlichen gasdichte Art verschlossen ist, um Gas innerhalb des Hohlraums durch adiabatisches Erhitzen zu erhitzen, wobei die Kompressionsanordnung konfiguriert ist, um das Volumen des Hohlraums in mehr als einer Stufe zu verringern, wobei die Verringerung des Volumens zwischen den Stufen angehalten wird;
wenn die Temperatur und/oder der Druck innerhalb des Hohlraums ein gewünschtes Niveau erreicht hat, Öffnen eines Luftströmungswegs zwischen dem Hohlraum und einem weiteren Bereich; und
Entfernen des Gegenstandes aus dem Hohlraum.

7. Verfahren nach Anspruch 6, wobei das Element (3) ein Fahrzeugairbag ist.

8. Verfahren nach Anspruch 6 oder 7, umfassend im Anschluss an das Öffnen des Luftströmungswegs den Schritt des Ermöglichens, dass das Element (3) vor dem Schritt des Entfernens des Elements abkühlt.

9. Verfahren nach einem der Ansprüche 6 bis 8, umfassend im Anschluss an das Öffnen des Luftströmungswegs den Schritt des weiteren Verringerns des Volumens des inneren Hohlraums (18), während der Luftströmungsweg in einer offenen Position gehalten wird.

10. Verfahren nach einem der Ansprüche 6 bis 9, wobei ein Ventil (4), das selektiv geöffnet werden kann, zum Öffnen des Luftströmungswegs bereitgestellt wird.

11. Verfahren nach einem der Ansprüche 6 bis 10, ferner umfassend den Schritt des Hinzufügens eines Zusatzmaterials in den Hohlraum (18) und vorzugsweise wobei das Zusatzmaterial eine Phasenwechseltemperatur aufweist, die zwischen der gewünschten Temperatur und der Temperatur des weiteren Bereiches liegt.

12. Verfahren nach einem der Ansprüche 6 bis 11, wobei der Schritt des Verringerns des Volumens des Hohlraums (18) das Verringern des Volumens des Hohlraums um zwischen einem Fünftel und einem Fünfzehntel seines anfänglichen Volumens umfasst.

13. Einrichtung oder Verfahren nach einem der vorhergehenden Ansprüche, wobei der weitere Bereich die umgebende Atmosphäre ist.

14. Einrichtung oder Verfahren nach einem der Ansprüche 1 bis 12, wobei der weitere Bereich das Innere eines Gefäßes umfasst, in dem der Gasdruck verglichen mit der umgebenden Atmosphäre verringert ist.

## Revendications

1. Appareil de compression (10) comprenant :
un dispositif possédant une cavité interne (18) dans laquelle un coussin de sécurité gonflable de véhicule (3) peut être placé ;
un mécanisme de compression (14) servant à réduire le volume de la cavité, dans lequel le mécanisme de compression est conçu pour réduire le volume de la cavité en plus d'un stade, la réduction de volume étant stoppée entre les stades ;
une vanne (4) pouvant être ouverte de manière sélective possédant une position fermée, dans laquelle la cavité est scellée de manière à être étanche, ou sensiblement étanche, aux gaz, et une position ouverte, dans laquelle un passage de flux de gaz est ouvert, permettant la communication entre la cavité et une région supplémentaire ; et
un mécanisme de commande de vanne servant à placer la vanne dans la position fermée lors d'une compression initiale, et servant à placer la vanne dans la position ouverte lorsque la température et/ou la pression à l'intérieur de la cavité atteint un niveau prédéterminé.

2. Appareil de compression (10) selon la revendication 1, dans lequel le montant à hauteur duquel le mécanisme de compression (14) a réduit le volume de la cavité (18) est utilisé comme indication de la température et/ou de la pression à l'intérieur de la cavité.

3. Appareil de compression (10) selon la revendication 1 ou 2, dans lequel un capteur de pression ou de température est positionné à l'intérieur de la cavité (18) afin de fournir une indication de la température ou de la pression à l'intérieur de la cavité.

4. Appareil (10) selon l'une quelconque des revendications précédentes, dans lequel le dispositif comprend un tube allongé (1), et le mécanisme de compression (14) comprend un piston qui peut se déplacer au sein du tube afin de réduire le volume de la cavité (18).

5. Appareil (10) selon la revendication 4, dans lequel au moins deux pistons (14) sont fournis, et dans lequel les pistons peuvent se déplacer indépendamment au sein du tube afin de réduire le volume de la cavité (18).

6. Procédé de compression d'un article, comprenant les étapes consistant à :
fournir un dispositif (10) présentant une cavité interne (18) ;
placer l'article (3) dans la cavité ;
réduire le volume de la cavité, pendant que la cavité est scellée de manière à être étanche, ou sensiblement étanche, aux gaz, par l'action d'un mécanisme de compression (14), afin de chauffer du gaz à l'intérieur de la cavité par chauffage adiabatique, le mécanisme de compression étant conçu afin de réduire le volume de la cavité en plus d'un stade, la réduction de volume étant stoppée entre les stades ;
lorsque la température et/ou la pression à l'intérieur de la cavité a atteint un niveau souhaité, ouvrir un passage de flux d'air entre la cavité et une région supplémentaire ; et retirer l'article de la cavité.

7. Procédé selon la revendication 6, dans lequel l'article (3) est un coussin de sécurité gonflable pour véhicule.

8. Procédé selon la revendication 6 ou 7, comprenant l'étape consistant à permettre à l'article (3) de refroidir, à la suite de l'ouverture du passage de flux d'air, avant l'étape consistant à retirer l'article.

9. Procédé selon l'une quelconque des revendications 6 à 8, comprenant l'étape consistant à réduire davantage le volume de la cavité interne (18), à la suite de l'ouverture du passage de flux d'air, tout en maintenant le passage de flux d'air en position ouverte.

10. Procédé selon l'une quelconque des revendications 6 à 9, dans lequel une vanne pouvant être ouverte de manière sélective (4) est fournie afin d'ouvrir le passage de flux d'air.

11. Procédé selon l'une quelconque des revendications 6 à 10, comprenant en outre l'étape consistant à ajouter à la cavité (18) un matériau additif, et, de préférence, dans lequel le matériau additif a une température de changement de phase comprise entre la température désirée et la température de la région supplémentaire.

12. Procédé selon l'une quelconque des revendications 6 à 11, dans lequel l'étape consistant à réduire le volume de la cavité (18) comprend la réduction du volume de la cavité de manière à ce qu'il atteigne entre un cinquième et un quinzième de son volume initial.

13. Appareil ou procédé selon l'une quelconque des revendications précédentes, dans lequel la région supplémentaire est l'atmosphère environnante.

14. Appareil ou procédé selon l'une quelconque des revendications 1 à 12, dans lequel la région supplémentaire comprend l'intérieur d'un récipient dans lequel la pression gazeuse est réduite par rapport à l'atmosphère environnante.
